Europäisches Patentamt

European Patent Office

Office européen des brevets

(11) Publication number: **0 202 725**
A2

## (12) EUROPEAN PATENT APPLICATION

(21) Application number: **86300697.9**

(22) Date of filing: **03.02.86**

(51) Int. Cl.⁴: **B 01 D 23/04**

(30) Priority: **17.05.85 GB 8512531**

(43) Date of publication of application:
**26.11.86 Bulletin 86/48**

(84) Designated Contracting States:
**BE DE FR GB IT NL**

(71) Applicant: **LIBRA CHEMICALS LIMITED**
**Martens Road Northbank Industrial Estate**
**Irlam Manchester M30 5BL(GB)**

(72) Inventor: **Thompson, Brian J.**
**Willowcroft Twemlow Lane**
**Cranage Nr.Holmes Chapel Cheshire(GB)**

(74) Representative: **Barker, Rosemary Anne (GB) et al,**
**Barlow, Gillett & Percival 94 Market Street**
**GB-Manchester M1 1PJ(GB)**

(54) **Filter bag sealing arrangement.**

(57) An annular member 20 is attached around the mouth of a filter bag 19 which is located in a filter chamber 30 defined by a cup-shaped housing 10 with an outlet port 12 provided with a cover 15 having an inlet port 17. The annular member 20 has a substantially perpendicular outwardly projecting rim 21 with a sealing membrane or beading 22 therebeneath, which rim 21 is supported upon a surface of the housing 10 surrounding its opening and is clamped thereagainst when the cover 15 is secured over the opening.

Fig. 1

Croydon Printing Company Ltd.

EP 0 202 725 A2

FILTER BAG SEALING ARRANGEMENT

This invention relates to liquid filtering apparatus incorporating a filter bag to remove contaminants from liquid flowing through the apparatus.

It has in the past proved advantageous to provide, in apparatus for pressurized filtering of materials, such as paints, solvents, fluids used for lubricating drill heads of oil drills, a removable (and hence replaceable) filter bag seated in a filter chamber. In one known apparatus, as described in British Patent No. 1411273, the filter bag is correctly seated in the chamber and is retained and sealed by the cover of the chamber by virtue of the mouth of the bag being folded inwardly over a separate ring member which locates in a groove extending around the top of the chamber wall. In another known apparatus, as described in British Patent Application No. 2049464, the bag is actually formed with an impervious ring member defining its mouth. The ring member has an external downturned lip which engages over an upwardly projecting rim extending around the top of the chamber itself or the top of a filter basket located therein.

Accordingly, in the known apparatus the top of the filter chamber must either be formed with an appropriate groove or rim, or a basket located inside the chamber must be appropriately supported so as to provide a rim for location of the bag ring.

It is an object of the present invention to provide liquid filtering apparatus in which a filter bag housing does not have to be specially formed to allow for retention and sealing of the filter bag by a housing cover. It is a further object to provide such apparatus with a more reliable seal between the housing, the filter bag and the cover.

Pursuant hereto the present invention provides liquid filtering apparatus comprising a housing defining a filter chamber with a liquid outlet port and having an opening which is overlain by a cover having a liquid inlet port, and a filter bag which is located in the filter chamber and is attached at its mouth to an impervious annular member the annular member having a substantially perpendicular outwardly projecting rim with a sealing membrane or beading attached therebeneath which is supported upon a surface of the housing surrounding the opening and is clamped thereagainst when the cover is secured on the housing.

The invention will be described further, by way of example, with reference to the accompanying drawings, in which:

Fig. 1 is a cross-section of a preferred practical embodiment of the liquid filtering apparatus of the invention;

Fig. 2 is a plan view of the annular member of the filter bag in the apparatus shown in Fig. 1; and

Fig. 3 is a cross-section to an enlarged scale along the line III-III in Fig. 2.

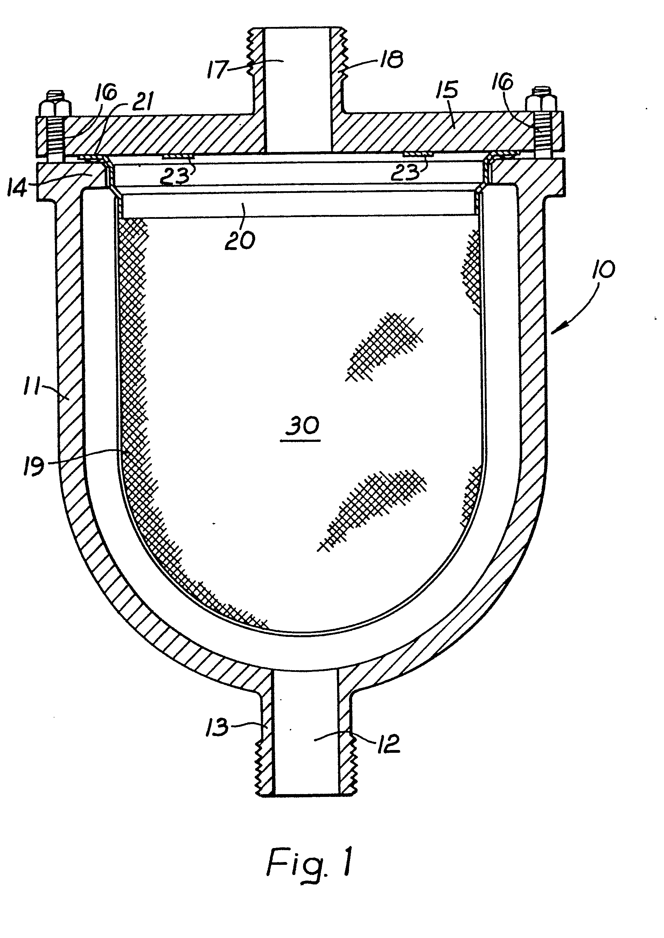

As shown in Fig. 1, a preferred embodiment of the filtering apparatus of the invention comprises a housing 10 which is shaped like a cup, bowl, or inverted bell and has a relatively thick metal wall 11 which defines a filter chamber 30 and is capable of withstanding considerable internal pressure. The housing has an opening at the top and a liquid outlet port 12 through a short pipe-like extension 13 at the bottom. A substantially horizontal inwardly projecting flange 14 at the top of the housing wall provides a surface surrounding the opening to the filter chamber.

A substantially circular cover 15, also of metal, is hinged to the top of the housing so that it can overlie the opening and be firmly secured thereto by bolt connections 16, or else be swung open to allow access to the filter chamber. A liquid inlet port 17 is provided at the centre of the cover 15, again through a short pipe-like extension 18 projecting from the upper surface of the cover 15.

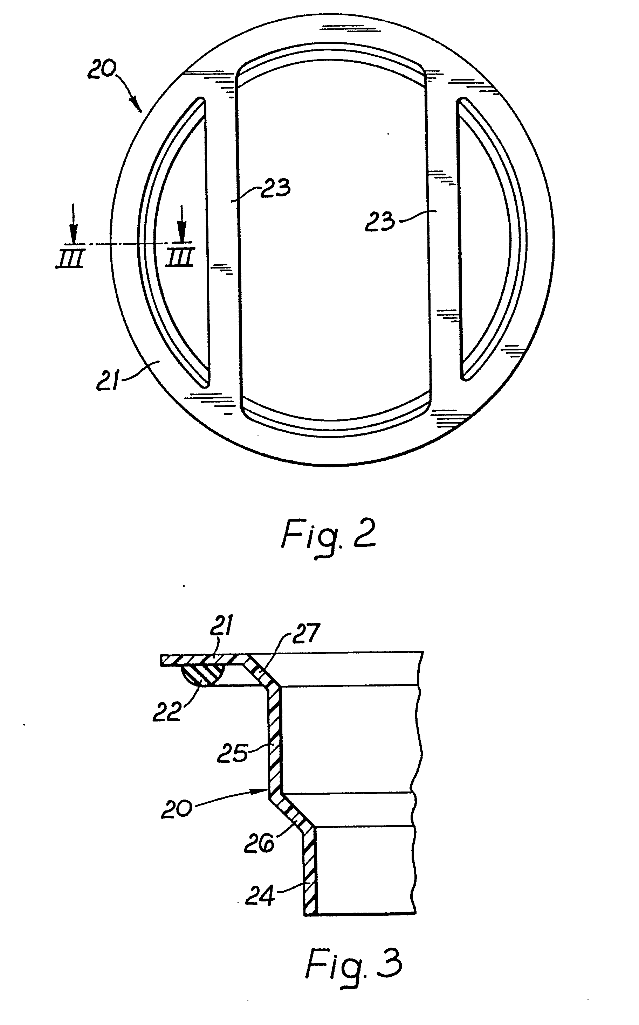

A filter bag 19, that is to say a bag of pervious filter material, which is attached around its mouth to an impervious annular member 20 is located in the filter chamber 30. The annular member 20, which is illustrated more clearly in Figs. 2 and 3 of the drawings, is made of flexible plastics material and has a substantially perpendicular outwardly projecting rim 21 with annular beading 22, for example of polytetrafluorcethylene, connected to its underside. The main part of the annular member is formed in profile of two substantially flat portions 24, 25 connected by an inclined portion or joggle 26 (see Fig. 3). One of these flat portions 25 is connected to the rim 21 (which is perpendicular thereto) by a further inclined portion 27. The rim 21 of the annular member 20 is supported upon the flange 14 at the top of the housing wall 11 so that the filter bag 19 is correctly positioned in the filter chamber 30. Two cross-pieces 23 extending between spaced apart locations on the rim 21 provide handles whereby the filter bag 19 and its attached annular member 20 are readily lifted out of the filter chamber 30 and replaced as a unit when the apparatus is not in use. To accomplish this the cover 15 must, of course, be released from the housing 10 and swung open.

In use, the filter bag 19 and its attached annular member
20 are fitted into the filter chamber 30 as just described and
the cover 15 is swung down to close the opening at the top of
the housing 10 and is firmly secured by bolts 16. The rim 21 of
the annular member 20 is thus firmly clamped between the flange
14 of the housing 10 and the lower surface of the cover 15 and
the beading 22, which is deformed therebetween, ensures a
particularly good seal. The inlet and outlet ports 17, 12 of
the apparatus are then connected to appropriate inflow and outflow
pipes (not shown) respectively and liquid to be filter is
supplied to the apparatus under pressure via the inlet port 17.
Contaminants in the liquid are retained in the bag 19 whilst
the filtrate flows out of the apparatus via the outlet port 12.
Obviously, the material of the filter bag 19 and its porosity
are chosen appropriately to remove contaminants from the liquid
being filtered. Where paints or solvents are being filtered and
thus purified, submicron filtration is often required and this
necessitates high pressures and an extremely tight seal between
the housing 10, the annular member 20 to which the bag 19 is
attached, and the cover 15. Such a good, reliable seal is not
usually possible where the plastics of the annular member 20 is
in direct contact with the metal of the housing 10, but provision
of the beading 22 on the underside of the annular member rim 21
allows this to be achieved. Again, the material of the annular member can be chosen appropriately depending on the liquid to be filtered by the apparatus.

Other variations are also possible. For example, instead of the beading 22, a substantially flat sealing membrane or else a beading in the form of an O-ring may be provided on the underside of the rim 21 of the annular member 20 to facilitate reliable liquid-tight sealing. Also, a perforated basket may be positioned inside the filter chamber 30 between the wall 11 of the housing 10 and the filter bag 19 in order to support the latter and prevent tearing of same under pressure.

## CLAIMS

1. Liquid filtering apparatus comprising a housing (10) defining a filter chamber (30) with a liquid outlet port (12) and having an opening which is overlain by a cover (15) having a liquid inlet port (17), and a filter bag (19) which is located in the filter chamber (30) and is attached at its mouth to an impervious annular member (20), characterised in that the annular member (20) has a substantially perpendicular outwardly projecting rim (21) with a sealing membrane or beading (22) attached therebeneath which is supported upon a flat surface of the housing (10) surrounding the opening and is clamped thereagainst when the cover (15) is secured on the housing (10).

2. Apparatus as claimed in claim 1 wherein the housing (10) and the cover (15) are made of metal, the annular member (20) is made of flexible plastics material and the sealing membrane or beading (22) is formed of polytetrafluoroethylene.

1/2

0202725

*Fig. 1*

20

23

23

21

III III

Fig. 2

21    27

22

25

20

26

24

Fig. 3